# EUROPÄISCHE PATENTSCHRIFT

(11) **EP 0 429 909 B1**
(45) Veröffentlichungstag und Bekanntmachung des Hinweises auf die Patenterteilung: **20.07.1994**
(21) Anmeldenummer: 90121368.6
(22) Anmeldetag: 08.11.1990
(51) Int. Cl.: H01Q 1/40, A01M 29/00

(54) **Stabantenne mit Kegelspitze**
Whip antenna with a cone
Antenne fouet avec un cône

(30) Priorität: 17.11.1989 DE 3938237
(43) Veröffentlichungstag der Anmeldung: 05.06.1991
(73) Patentinhaber: Daimler-Benz Aerospace Aktiengesellschaft, 81663 München (DE)
(72) Erfinder: Nedtwig, Joachim, Dipl.-Ing., W-7900 Ulm (DE)
(74) Vertreter: Schulze, Harald Rudolf, Dipl.-Ing.

(56) Entgegenhaltungen:
- EP-A- 0 011 525
- CH-A- 166 023
- DE-A- 3 533 261
- US-A- 4 435 713

## Beschreibung

Die Erfindung betrifft eine Stabantenne mit einer Kegelspitze gemäß dem Oberbegriff des Anspruchs 1.

Damit auf der Spitze von Stabantennen aus Verschmutzungs- und den damit verbundenen Korrisionsgründen keine Vögel landen, sind die Antennen sehr spitz ausgeformt. Diese scharfen Metallspitzen verursachen starke Coronaentladungen, da an ihnen hohe elektrische Feldstärken auftreten können. Die Coronaentladungen wiederum verursachen bei empfindlichen Empfangsanlagen ein prasselndes Störgeräusch, das die Sprachverständlichkeit herabsetzt und bringen bei hohen Störimpulsen die im Antennenfuß vorhandene Überspannungsschutzeinrichtung der Antenne unnötig zum Ansprechen und setzen die Antenne während dieser Zeit außer Betrieb.

Der Erfindung liegt die Aufgabe zugrunde, eine Stabantenne zu schaffen, deren Spitze weniger anfällig für das Entstehen von Coronaentladungen ist und die gleichzeitig das Landen von Vögeln wirksam verhindert.

Diese Aufgabe wird erfindungsgemäß durch die im Kennzeichen des Anspruchs 1 angegebenen Merkmale gelöst.

Die Erfindung hat den Vorteil, daß mit einfachen und preiswerten konstruktiven Mitteln über eine Änderung der mechanischen Ausführung der Antennenspitze ein Schutz gegen Coronaentladungen erreicht wird.

Eine Weiterbildung der Erfindung ist in dem Unteranspruch angegeben, der eine vorteilhafte Materialauswahl für die Kunststoffspitze offenbart.

Anhand der Zeichnung ist ein Ausführungsbeispiel der Erfindung näher erläutert.
FIG. 1 zeigt eine herkömmliche Antennenspitze und
FIG. 2 zeit eine erfindungsgemäße Antennenspitze
Die Zeichnung zeigt eine Aluminium-Stabantenne mit Kegelförmiger Spitze. In Fig. 1 ist eine Stabantenne 1 gezeigt, deren angeformte Metallspitze 4 starke Coronaentladungen 5 aus der die Spitze umgebenden Luft verursacht. Das Metall ist so geformt, daß Vögel auf ihr nicht landen können.

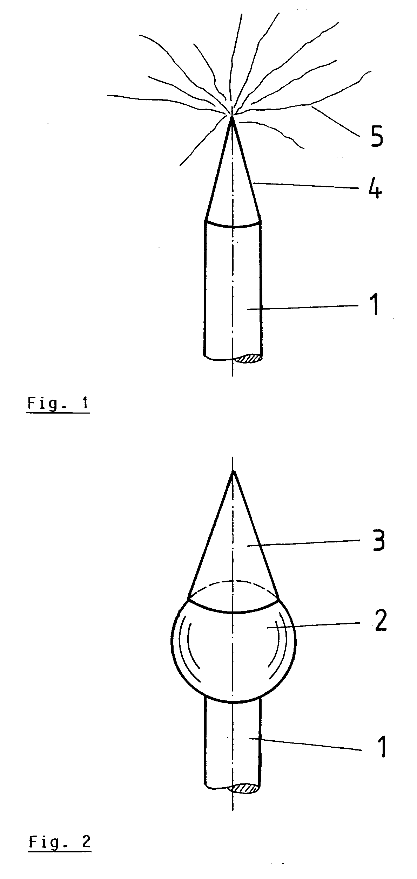

In Fig. 2 ist ein erfindungsgemäßes Ausführungsbeispiel gezeigt. Die Stabantenne 1 weist an ihrem Ende eine Metallkugel 2 auf, die das Entstehen von Coronaentladungen unterdrückt. Zum Schutz gegen Vögel ist auf der Metallkugel 2 eine Kunststoffspitze 3 befestigt. Die Befestigung der Kunststoffspitze 3 auf der Metallkugel 2 kann durch Aufstecken, Aufschrauben oder Kleben erfolgen.

Das Material der Kunststoffspitze 3 weist eine Dielektrizitätskonstante auf, deren Wert klein, z.B. kleiner als 5, ist und vorzugsweise in der Nähe von 1 liegt.

## Patentansprüche

1. Stabantenne (1) mit einer Kegelspitze (3), die das Landen von Vögeln auf der Antennenspitze verhindert, dadurch gekennzeichnet, daß die Spitze der Stabantenne (1) als Metallkugel (2) ausgebildet ist, auf der eine spitze, kegelförmige Kunststoffspitze (3) befestigt ist.

2. Stabantenne nach Anspruch 1, dadurch gekennzeichnet, daß das Material der Kunststoffspitze (3) eine Dielektrizitätskonstante aufweist, deren Wert kleiner als 5 ist.

## Claims

1. Rod antenna (1) with a cone tip (3) which prevents birds from landing on the antenna tip, characterised thereby that the tip of the rod antenna (1) is constructed as a metal ball (2), on which a pointed, conical synthetic material tip (3) is fastened.

2. Rod antenna according to claim 1, characterised thereby that the material of the synthetic material tip (3) has a dielectric constant of which the value is smaller than 5.

## Revendications

1. Antenne tige (1) possédant une pointe conique (3) qui empêche la pose d'oiseaux sur le bout de l'antenne, caractérisée en ce que le bout de l'antenne tige (1) est réalisé sous la forme d'une sphère métallique (2) sur laquelle est fixée une pointe (3) en matière plastique ayant une forme conique pointue.

2. Antenne tige selon la revendication 1, caractérisée en ce que le matériau de la pointe (3) en matière plastique possède une constante diélectrique dont la valeur est inférieure à 5.
